# EUROPÄISCHE PATENTSCHRIFT

(11) **EP 1 057 929 B1**
(45) Veröffentlichungstag und Bekanntmachung des Hinweises auf die Patenterteilung: **21.01.2004**
(21) Anmeldenummer: 00105581.3
(22) Anmeldetag: 16.03.2000
(51) Int. Cl.: D21G 1/02

(54) **Elastische Walze und Verfahren zum Herstellen einer solchen**
Soft roll and process for making such a roll
Rouleau élastique et procédé de fabrication d' un tel rouleau

(30) Priorität: 02.06.1999 DE 19925418
(43) Veröffentlichungstag der Anmeldung: 06.12.2000
(73) Patentinhaber: Voith Paper Patent GmbH, 89522 Heidenheim (DE)
(72) Erfinder: Kärger, Jens Christian, Dr., 8405 Winterthur (CH); Vodermayer, Albert Maria, Dr., 8305 Dietlikon (CH)
(74) Vertreter: Manitz, Finsterwald & Partner GbR

(56) Entgegenhaltungen:
- WO-A-99/63154
- US-A- 3 852 862
- US-A- 4 576 845
- US-A- 5 091 027

## Beschreibung

Die vorliegende Erfindung betrifft eine Walze, insbesondere zum Glätten von Papierbahnen, mit einem insbesondere aus Metall bestehenden harten Walzenkern, der an seiner Außenseite mit einer elastischen Bezugsschicht versehen ist, die aus einem Matrixmaterial und in das Matrixmaterial eingebetteten Füllstoffen besteht. Weiterhin ist die Erfindung auf ein Verfahren zum Herstellen einer solchen Walze gerichtet.

Elastische Walzen dieser Art werden beispielsweise bei der Satinage von Papierbahnen verwendet. Dabei bildet jeweils eine elastische Walze zusammen mit einer harten Walze einen Preßspalt, durch den die zu bearbeitende Papierbahn hindurchgeführt wird. Während die harte Walze eine beispielsweise aus Stahl oder Hartguß bestehende sehr glatte Oberfläche besitzt und für die Glättung der ihr zugewandten Seite der Papierbahn zuständig ist, bewirkt die auf die gegenüberliegende Seite der Papierbahn einwirkende elastische Walze eine Vergleichmäßigung und Verdichtung der Papierbahn im Preßnip. Die Größenordnung der Walzen liegt bei Längen von 3 bis 12 m bzw. Durchmessern von 450 bis 1500 mm. Sie halten Linienkräften bis zu 600 N/mm und Druckspannungen bis 130 N/mm² stand.

Da die Tendenz bei der Papierherstellung dahin geht, daß die Satinage im Online-Betrieb erfolgt, d.h. daß die die Papiermaschine oder Streichmaschine verlassende Papierbahn unmittelbar durch die Papierglättvorrichtung (Kalander) geführt wird, werden an die Walzen der Glättvorrichtung insbesondere bezüglich der Temperaturbeständigkeit höhere Anforderungen als bisher gestellt. Durch die im Online-Betrieb erforderlichen hohen Transportgeschwindigkeiten der Papierbahn und die damit verbundenen hohen Rotationsgeschwindigkeiten der Kalanderwalzen wird deren Nipfrequenz, das ist die Frequenz, mit der der Bezug komprimiert und wieder entlastet wird, erhöht, was wiederum zu erhöhten Walzentemperaturen führt. Diese im Online-Betrieb entstehenden hohen Temperaturen führen zu Problemen, die bei bekannten elastischen Walzen bis zur Zerstörung des Kunststoffbelages führen können. Zum einen sind bei bekannten Kunststoffbelägen maximale Temperaturdifferenzen von ca. 20°C über die Breite der Walze zulässig und zum anderen besitzen die für die Beschichtung üblicherweise verwendeten Kunststoffe einen wesentlich höheren Temperaturausdehnungskoeffizienten als die üblicherweise verwendeten Stahlwalzen bzw. Hartgußwalzen, so daß durch eine Temperaturerhöhung hohe axiale Spannungen zwischen der Stahlwalze bzw. Hartgußwalze und der mit ihr verbundenen Kunststoffbeschichtung auftreten.

Durch diese hohen Spannungen verbunden mit insbesondere punktuell auftretenden Erhitzungsstellen innerhalb der Kunststoffbeschichtung können sogenannte Hot-Spots auftreten, an denen ein Ablösen oder sogar ein Aufplatzen der Kunststoffschicht erfolgt.

Diese Hot-Spots treten insbesondere dann auf, wenn zusätzlich zu den mechanischen Spannungen und der relativ hohen Temperatur Kristallisierungspunkte in Form von beispielsweise fehlerhaften Klebungen, Ablagerungen oder überdurchschnittliche Einbuchtungen des elastischen Belages, beispielsweise durch Falten oder Fremdkörper an der Papierbahn, vorhanden sind. In diesen Fällen kann die Temperatur an diesen Kristallisierungspunkten von üblichen 80°C bis 90°C bis auf über 150°C steigen, wodurch die erwähnte Zerstörung der Kunststoffschicht erfolgt.

Zur Steuerung der Eigenschaften der elastischen Bezugsschicht, werden pulverförmige Füllstoffe und/oder Fasern in das Matrixmaterial eingebracht. Je nach Menge und physikalischer Eigenschaft dieser Füllstoffe bzw. der Fasern, werden die physikalischen Eigenschaften der elastischen Bezugsschicht von den Füllstoffen bzw. den Fasern dominiert bzw. beeinflußt.

Aus der US-A-3,852,862 ist eine Transportwalze zum Transportieren von Produkten durch Hochöfen bekannt. Die Transportwalzen besitzen einen harten Walzenkern, der an seiner Außenseite mit einer Bezugsschicht versehen ist, die beispielsweise keramische Fasern, Quarz, Mineralwolle oder Metallwolle umfassen kann. Die verwendeten Fasern bzw. Füllstoffe sind dabei in einem aus anorganischen oder organischen Bindemitteln bestehendem Matrixmaterial eingebettet.

Es ist eine Aufgabe der vorliegenden Erfindung ein Verfahren zur Herstellung einer elastischen Walze der eingangs genannten Art sowie eine entsprechende Walze anzugeben, bei der die Gefahr des Auftretens von Hot-Spots verringert wird.

Der die Walze betreffende Teil der Aufgabe wird erfindungsgemäß durch die Merkmale des Anspruchs 1 gelöst. Ein entsprechendes erfindungsgemäßes Verfahren ist durch die Merkmale des Anspruchs 6 gekennzeichnet.

In Gegensatz zu den Bezugsschichten bei bekannten Glättwalzen von Kalandern besteht bei der erfindungsgemäß ausgebildeten Walze die Bezugsschicht nicht aus Kunststoff, sondern aus einem weichen Metall, wie beispielsweise Zirkon. Aufgrund der hohen Wärmeleitfähigkeit von Metall ist bei einer erfindungsgemäß ausgebildeten Walze eine sehr schnelle Wärmeableitung von innerhalb der Bezugsschicht auftretenden Überhitzungen möglich, so daß das Auftreten von Hot-Spots und die damit verbundene Zerstörung der Bezugsschicht sicher verhindert wird.

Darüber hinaus treten aufgrund der Tatsache, daß sowohl der Walzenkern als auch die Bezugsschicht aus Metall hergestellt sind und somit im wesentlichen den gleichen Wärmeausdehnungskoeffizienten besitzen, keine oder keine wesentlichen Längsspannungen zwischen dem Walzenkern und der metallischen Bezugsschicht auf, so daß auch aus diesem Grund das Auftreten von Hot-Spots und damit verbunden ein Ablösen oder Aufplatzen der Bezugsschicht vermieden wird.

Die erforderliche Elastizität der Bezugsschicht wird durch eine geeignete Wahl eines entsprechend weichen Metalls gewährleistet. Vorteilhaft besitzen zusätzlich die in das das Matrixmaterial bildende Metall eingebetteten Füllstoffe eine höhere Elastizität als das Metall, wodurch die Elastizität der Bezugsschicht, die sich aus den jeweiligen Elastizitäten des Metalls sowie der Füllstoffe zusammensetzt, erhöht wird. Im Gegensatz zu den bekannten Walzen besitzen somit die in das Matrixmaterial eingebrachten Füllstoffe nicht die Aufgabe, die Steifigkeit der Bezugsschicht zu erhöhen, sondern im Gegenteil diese zu verringern. Da im Gegensatz zu den bekannten Walzen bei der erfindungsgemäß ausgebildeten Walze die im Betrieb innerhalb der Bezugsschicht auftretende Wärme somit unmittelbar über das Matrixmaterial und nicht über die Füllstoffe abgeleitet wird und das Matrixmaterial über die gesamte Ausdehnung der Bezugsschicht eine ununterbrochene Wärmeleitfähigkeit besitzt, kann die Wärme von unerwünschten Überhitzungsstellen schnell und zuverlässig sowohl radial zum Walzenkern als auch axial abgeführt werden.

Nach der Erfindung ist das das Matrixmaterial bildende Metall ein bei niedrigen Temperaturen, insbesondere bei Temperaturen unter ca. 600° C, speziell bei ca. 480° C oder darunter schmelzendes Metall. Durch die Verwendung eines niedrigschmelzenden Metalls wird die Herstellung einer erfindungsgemäß ausgebildeten Walze vereinfacht, da das Material des Walzenkerns sowie das Material der in das Matrixmaterial einzubringenden Füllstoffe eine geringere Hitzebeständigkeit als bei Verwendung von bei hohen Temperaturen schmelzendem Metall besitzen müssen.

Bevorzugt können die Füllstoffe aus Aramid oder dergleichen bestehen und/oder als synthetische Teilchen, insbesondere als Fasern oder als Rovings ausgebildet sein. Bei einer Ausbildung als Fasern kann zumindest ein Teil, insbesondere ein überwiegender Teil der Fasern in axialer und/oder in radialer Richtung oder statistisch verteilt ausgerichtet sein. Je nach Ausrichtung der Fasern kann beispielsweise die Steifigkeit bzw. die Elastizität der Bezugsschicht über die Fasern eingestellt werden.

Die Fasern können in einer oder mehreren insbesondere konzentrisch angeordneten Faserlagen angeordnet sein und es ist weiterhin möglich, daß weitere Füllstoffe, insbesondere in Form von Fasern oder Pulver in dem das Matrixmaterial bildenden Metall angeordnet sind, um die physikalischen Eigenschaften der Bezugsschicht in gewünschter Weise zu beeinflussen.

Zu Herstellung einer erfindungsgemäß ausgebildeten Walze kann der Walzenkern mit dem Metall beschichtet werden, wobei hierzu das Metall im flüssigen Zustand auf den Walzenkern aufgebracht (aufgedampf, aufgespritzt oder dergleichen) wird. Es ist auch möglich, zur Erzeugung der Bezugsschicht zumindest ein aus einer Vielzahl von Metallfasern oder von metallbeschichteten Fasern bestehendes Faserbündel, insbesondere in mehreren Faserlagen übereinander, auf den Walzenkern zu wickeln. Dabei können die Metallfasern bzw. die Metallbeschichtung der Fasern sich an ihrer Oberfläche noch weitgehend in flüssigem Zustand befinden, so daß nach dem Aufwickeln eine einheitliche metallische Bezugsschicht auf dem Walzenkern vorliegt. Es ist jedoch grundsätzlich auch möglich, daß die im festen Zustand aufgewickelten Metallfasern oder metallbeschichteten Fasern nach dem Wickelvorgang soweit erhitzt werden, daß zumindest ihre Oberfläche in einen flüssigen Zustand übergeht, wodurch die einheitliche metallische Bezugsschicht erzeugt wird. Grundsätzlich ist es auch möglich, die Fasern ohne metallische Beschichtung auf den Walzenkern aufzuwickeln und nach erfolgter Wicklung mit dem Metall zu beschichten bzw. zu beaufschlagen.

Sollen die Fasern bereits mit einer im wesentlichen flüssigen Metallschicht auf die Walze aufgewickelt werden, so ist es vorteilhaft, die Fasern oder die Faserbündel vor dem Aufwickeln auf den Walzenkern mit dem Metall zu beschichten, indem sie insbesondere durch ein Metallbad gezogen werden.

Nach Erzeugen und Trocknen der metallischen Bezugsschicht wird die Oberfläche dieser Bezugsschicht vorteilhaft geschliffen, so daß die Walze eine extrem glatte Oberfläche erhält.

Weitere vorteilhafte Ausführungsformen der Erfindung sind in den Unteransprüchen angegeben.

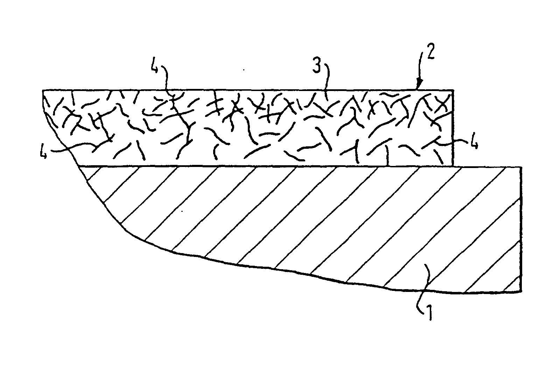

Die Erfindung wird nachfolgend anhand eines Ausführungsbeispiels unter Bezugnahme auf die einzige Figur näher beschrieben.

Die Figur zeigt einen Teil eines in Längsrichtung geschnittenen, beispielsweise aus Stahl oder Hartguß bestehenden Walzenkerns 1, der an seiner Außenseite mit einer ebenfalls geschnitten dargestellten elastischen Bezugsschicht 2 versehen ist.

Die Bezugsschicht 2 besteht aus einem weichen Metall 3, beispielsweise aus Zirkon, in das eine Vielzahl von Fasern 4 eingebettet ist. Die Fasern 4 können dabei als weiche synthetische Fasern, beispielsweise aus Aramid, ausgebildet sein. Gemäß dem Ausführungsbeispiel nimmt die Häufigkeit der Fasern 4 radial nach außen zu. Da die Fasern 4 eine höhere Elastizität besitzen als das Metall 3, besitzt damit die elastische Bezugsschicht 2 an ihrer radial außen gelegenen Seite eine höhere Elastizität als in ihrem radial inneren Bereich. Grundsätzlich ist es jedoch auch möglich, die Fasern 4 gleichmäßig über die Bezugsschicht 2 zu verteilen oder, falls erwünscht, die Häufigkeit der Fasern 4 radial nach innen zu erhöhen.

Da das Matrixmaterial der Bezugsschicht 2 aus Metall ausgebildet ist und das Matrixmaterial in allen Richtungen, d.h. in radialer, axialer und in Umfangsrichtung um die Fasern 4 herum durchgängige, ununterbrochene Materialbahnen besitzt, ist von jeder Stelle innerhalb der Bezugsschicht 2 ein sehr guter Wärmeleitpfad nach allen Richtungen vorhanden. Dies bewirkt, daß im Falle einer punktuellen Erhitzung innerhalb der Bezugsschicht, beispielsweise aufgrund von erhöhter Walkarbeit im Betrieb, die erzeugte Hitze sehr schnell von dem Entstehungspunkt abgeleitet wird. Dabei kann eine solche Ableitung sowohl in axialer Richtung als auch radial zu dem Walzenkern 1 hin erfolgen, woraufhin die Hitze von dem Walzenkern 1 radial nach innen oder axial zur Seite abgeführt wird.

Das Auftreten von Hot-Spots wird durch die hohe Wärmeleitfähigkeit der aus Metall bestehenden Bezugsschicht zuverlässig verhindert.

### Bezugszeichenliste

- 1: Walzenkern
- 2: elastische Bezugsschicht
- 3: weiches Metall
- 4: Fasern

## Patentansprüche

1. Walze, insbesondere zum Glätten von Papierbahnen, mit einem insbesondere aus Metall bestehenden harten Walzenkern (1), der an seiner Außenseite mit einer elastischen Bezugsschicht (2) versehen ist, die aus einem Matrixmaterial und in das Matrixmaterial eingebetteten Füllstoffen (4) besteht,
**dadurch gekennzeichnet,**
**dass** das Matrixmaterial aus einem weichen Metall (3) besteht, das bei niedrigen Temperaturen, insbesondere bei Temperaturen unter ca. 600°C, bevorzugt bei ca. 480°C oder darunter schmilzt oder Zirkon ist.

2. Walze nach Anspruch 1,
**dadurch gekennzeichnet,**
**daß** als Metall (3) Zirkon verwendet wird und/oder daß die Füllstoffe (4) eine höhere Elastizität besitzen als das das Matrixmaterial bildende Metall (3).

3. Walze nach einem der vorhergehenden Ansprüche,
**dadurch gekennzeichnet,**
**daß** die Wärmeleitfähigkeit des das Matrixmaterial bildenden Metalls (3) größer ist als die Wärmeleitfähigkeit der Füllstoffe (4) und/oder daß der Wärmeausdehnungskoeffizient des das Matrixmaterial bildenden Metalls (3) im wesentlichen gleich groß wie der Wärmeausdehnungskoeffizient des Walzenkerns (1) ist und/oder daß die Füllstoffe (4) aus Aramid oder dergleichen bestehen.

4. Walze nach einem der vorhergehenden Ansprüche,
**dadurch gekennzeichnet,**
**daß** die Füllstoffe als synthetische Teilchen, insbesondere als Fasern (4) oder als Rovings ausgebildet sind, insbesondere daß zumindest ein Teil, insbesondere ein überwiegender Teil der Fasern (4) in axialer Richtung ausgerichtet sind und/oder daß zumindest ein Teil, insbesondere ein überwiegender Teil der Fasern (4) in radialer Richtung ausgerichtet sind und/oder daß zumindest ein Teil, insbesondere ein überwiegender Teil der Fasern (4) statistisch verteilt ausgerichtet sind und/oder daß die Fasern in einer Faserlage oder in radial aufeinanderfolgenden Faserlagen angeordnet sind.

5. Walze nach einem der vorhergehenden Ansprüche,
**dadurch gekennzeichnet,**
**daß** zusätzlich zu den Füllstoffen (4) weitere Füllstoffe, insbesondere in Form von Fasern oder Pulver in dem das Matrixmaterial bildenden Metall (3) angeordnet sind, insbesondere daß die weiteren Füllstoffe aus Quarz und/oder PTFE und/oder aus Kohlenstoffund/oder Glasfasern bestehen.

6. Verfahren zum Herstellen einer elastischen Walze mit einem insbesondere aus Metall bestehenden harten Walzenkern, der mit einer elastischen Bezugsschicht versehen ist, die aus einem Matrixmaterial und in das Matrixmaterial eingebetteten Füllstoffen besteht, insbesondere zum Herstellen einer Walze nach einem der vorherigen Ansprüche,
**dadurch gekennzeichnet,**
**daß** zur Erzeugung der Bezugsschicht ein weiches Metall im flüssigen Zustand auf den Walzenkern aufgebracht wird.

7. Verfahren nach Anspruch 6,
**dadurch gekennzeichnet,**
**daß** der Walzenkern mit dem Metall beschichtet wird.

8. Verfahren nach Anspruch 6 oder 7,
**dadurch gekennzeichnet,**
**daß** zur Erzeugung der Bezugsschicht zumindest ein aus einer Vielzahl von Metallfasern oder von metallbeschichteten Fasern bestehendes Faserbündel, insbesondere in mehreren Faserlagen übereinander, auf den Walzenkern gewickelt wird, insbesondere daß das Faserbündel durch einen oder mehrere Faserroving und/oder durch ein Faservlies gebildet wird, wobei ein Roving jeweils aus einer Vielzahl von nebeneinanderliegenden Fasern der gleichen Art besteht, und/oder daß das Faserbündel oder die einzelnen Fasern vor dem Aufwickeln auf den Walzenkern mit Metall beschichtet werden, insbesondere durch ein Metallbad gezogen werden, oder daß das Faserbündel oder die Fasern im wesentlichen trocken auf den Walzenkern aufgewickelt werden und während oder nach dem Aufwickeln mit dem Metall beschichtet bzw. beaufschlagt werden.

9. Verfahren nach Anspruch 8,
**dadurch gekennzeichnet,**
**daß** als Fasern Glas- und/oder Kohlefasern verwendet werden.

10. Verfahren nach einem der Ansprüche 6 bis 9,
**dadurch gekennzeichnet,**
**daß** nach Aufbringen des Metalls auf den Walzenkern die Oberfläche der metallischen Bezugsschicht geschliffen wird.

## Claims

1. A roll, in particular for smoothing paper webs, comprising a hard roll core (1), in particular consisting of metal, which is provided at its outer side with a resilient covering layer (2) which consists of a matrix material and fillers (4) embedded in the matrix material, **characterised in that** the matrix material consists of a soft metal (3) which melts at low temperatures, in particular at temperatures below circa 600°C, preferably at circa 480°C or below, or is zirconium.

2. A roll in accordance with claim 1, **characterised in that** zirconium is used as the metal (3); and/or **in that** the fillers (4) have a higher resilience than the metal (3) forming the matrix material.

3. A roll in accordance with any one of the preceding claims, **characterised in that** the thermal conductivity of the metal (3) forming the matrix material is higher than the thermal conductivity of the fillers (4); and/or **in that** the coefficient of thermal expansion of the metal (3) forming the matrix material is substantially as high as the coefficient of thermal expansion of the roll core (1); and/or **in that** the fillers (4) consist of aramide or the like.

4. A roll in accordance with any one of the preceding claims, **characterised in that** the fillers are formed as synthetic particles, in particular as fibres (4) or as rovings; in particular **in that** at least some, in particular a predominant portion, of the fibres (4) are aligned in the axial direction; and/or **in that** at least some, in particular a predominant portion, of the fibres (4) are aligned in the radial direction; and/or **in that** at least some, in particular a predominant portion, of the fibres (4) are statistically aligned; and/or **in that** the fibres are arranged in a fibre layer or in radially successive fibre layers.

5. A roll in accordance with any one of the preceding claims, **characterised in that**, in addition to the fillers (4), further fillers, in particular in the form of fibres or powder are arranged in the metal (3) forming the matrix material; in particular **in that** the further fillers consist of quartz and/ or of PTFE and/ or of carbon fibres and/ or of glass fibres.

6. A method for the manufacture of an elastic roll comprising a hard roll core, in particular consisting of metal, which is provided with a resilient covering layer which consists of a matrix material and fillers embedded in the matrix material, in particular for the manufacture of a roll in accordance with any one of the preceding claims, **characterised in that** a soft metal is applied to the roll core in a liquid state in order to produce the covering layer.

7. A method in accordance with claim 6, **characterised in that** the roll core is coated with the metal.

8. A method in accordance with claim 6 or claim 7, **characterised in that**, in order to produce the covering layer, at least one fibre bundle consisting of a plurality of metal fibres or of metal-coated fibres is wound onto the roll core, in particular in a plurality of fibre layers on top of one another; in particular **in that** the fibre bundle is formed by one or more fibre rovings and/or by a fibre mat, with each roving consisting of a plurality of fibres of the same type adjoining one another; and/or **in that** the fibre bundle or the individual fibres are coated with metal, are in particular drawn through a metal bath, before being wound onto the roll core; or **in that** the fibre bundle or the fibres are wound onto the roll core substantially dry and have the metal coated or applied during or after the winding on.

9. A method in accordance with claim 8, **characterised in that** glass fibres and/or carbon fibres are used as the fibres.

10. A method in accordance with any one of claims 6 to 9, **characterised in that** the surface of the metallic covering layer is ground after the application of the metal onto the roll core.

## Revendications

1. Rouleau, en particulier pour le lissage de bandes de papier, avec un noyau de rouleau dur (1) se composant en particulier de métal, qui est muni sur son côté extérieur d'une couche de revêtement élastique (2) se composant d'un matériau de matrice et de matières de remplissage (4) noyées dans le matériau de matrice, **caractérisé en ce que** le matériau de matrice se compose d'un métal tendre (3) fondant à des températures basses, en particulier à des températures inférieures à environ 600°C, de préférence à environ 480°C ou en dessous, ou étant zircon.

2. Rouleau selon la revendication 1, **caractérisé en ce que** le métal (3) utilisé est du zirconium et/ou **en ce que** les matières de remplissage (4) ont une élasticité supérieure à celle du métal (3) formant le matériau de matrice.

3. Rouleau selon l'une quelconque des revendications précédentes, **caractérisé en ce que** la conductibilité thermique du métal (3) formant le matériau de matrice est plus élevée que la conductibilité thermique des matières de remplissage (4) et/ou **en ce que** le coefficient de dilatation thermique du métal (3) formant le matériau de matrice est sensiblement la même que le coefficient de dilatation thermique du noyau de rouleau (1) et/ou **en ce que** les matières de remplissage (4) se composent d'aramide ou d'un matériau similaire.

4. Rouleau selon l'une quelconque des revendications précédentes, **caractérisé en ce que** les matières de remplissage sont configurées comme particules synthétiques, spécialement comme fibres (4) ou comme stratifils, en particulier **en ce qu'**au moins une partie, spécialement une partie prépondérante, des fibres (4) sont orientées dans le sens axial et/ou **en ce qu'**au moins une partie, en particulier une partie prépondérante, des fibres (4) sont orientées dans le sens radial et/ou **en ce qu'**au moins une partie, en particulier une partie prépondérante, des fibres (4) sont orientées avec une répartition statistique et/ou **en ce que** les fibres sont disposées dans une couche de fibres ou dans des couches de fibres placées les unes derrière les autres dans le sens radial.

5. Rouleau selon l'une quelconque des revendications précédentes, **caractérisé en ce qu'**en plus des matières de remplissage (4), d'autres matières de remplissage, en particulier sous forme de fibres ou de poudre, sont disposées dans le métal (3) formant le matériau de matrice, en particulier **en ce que** les autres matières de remplissage se composent de quartz et/ou de PTFE et/ou de fibres de carbone et/ou de verre.

6. Procédé pour la fabrication d'un rouleau élastique avec un noyau de rouleau dur se composant en particulier de métal, qui est muni d'une couche de revêtement élastique se composant d'un matériau de matrice et de matières de remplissage noyées dans le matériau de matrice, en particulier pour la fabrication d'un rouleau selon l'une quelconque des revendications précédentes, **caractérisé en ce que**, pour la production de la couche de revêtement, un métal tendre est appliqué à l'état liquide sur le noyau de rouleau.

7. Procédé selon la revendication 6, **caractérisé en ce que** le noyau de rouleau est recouvert avec le métal.

8. Procédé selon la revendication 6 ou 7, **caractérisé en ce que**, pour la réalisation de la couche de revêtement, au moins un faisceau de fibres se composant d'une pluralité de fibres métalliques ou de fibres recouvertes de métal est enroulé sur le noyau de rouleau, en particulier en plusieurs couches de fibres superposées, en particulier **en ce que** le faisceau de fibres est formé par un ou plusieurs stratifils de fibres et/ou par une nappe de fibres, un stratifil se composant respectivement d'une pluralité de fibres de même genre placées les unes à côté des autres, et/ou **en ce que** le faisceau de fibres ou les fibres individuelles sont recouvertes de métal avant l'enroulement sur le noyau de rouleau en étant en particulier tiré à travers un bain de métal, ou **en ce que** le faisceau de fibres ou les fibres sont enroulés sensiblement en état sec sur le noyau de rouleau et recouverts de métal ou soumis à une application de métal pendant ou après l'enroulement.

9. Procédé selon la revendication 8, **caractérisé en ce que** des fibres de verre et/ou des fibres de carbone sont utilisées comme fibres.

10. Procédé selon l'une quelconque des revendications 6 à 9, **caractérisé en ce qu'**après l'application du métal sur le noyau de rouleau, la surface de la couche de revêtement métallique fait l'objet d'une rectification.
